(19) Europäisches Patentamt / European Patent Office / Office européen des brevets

(11) **EP 2 416 433 A1**

(12) **EUROPEAN PATENT APPLICATION**
published in accordance with Art. 153(4) EPC

(43) Date of publication:
08.02.2012 Bulletin 2012/06

(51) Int Cl.:
*H01M 10/04* (2006.01)

(21) Application number: 09842624.0

(86) International application number:
PCT/JP2009/056680

(22) Date of filing: 31.03.2009

(87) International publication number:
WO 2010/113270 (07.10.2010 Gazette 2010/40)

(84) Designated Contracting States:
AT BE BG CH CY CZ DE DK EE ES FI FR GB GR
HR HU IE IS IT LI LT LU LV MC MK MT NL NO PL
PT RO SE SI SK TR

(71) Applicant: Mitsubishi Heavy Industries, Ltd.
Tokyo 108-8215 (JP)

(72) Inventor: KOGURE, Masanori
Tokyo 108-8215 (JP)

(74) Representative: Henkel, Breuer & Partner
Patentanwälte
Maximiliansplatz 21
80333 München (DE)

(54) **SECONDARY CELL AND CELL SYSTEM**

(57)    A secondary cell (101) includes: an angular cell can (1) having a positive electrode terminal (8) and a negative electrode terminal (9); an electrode group (G) arranged in the angular cell can (1) and having a sheet-shaped positive electrode (2) electrically connected to the positive electrode terminal (8) and a sheet-shaped negative electrode (3) electrically connected to the negative electrode terminal (9) which are overlain via a separator; a first and a second insulating auxiliary sheet (4) arranged at opposing positions so as to sandwich the electrode group (G) from the side of the longer side of the plane of the angular cell can (1) where the positive electrode terminal (8) and the negative electrode terminal (9) are formed; and a third and a fourth insulating auxiliary sheet (5) having substantially the same size as the inner size of the angular cell can in the shorter side direction of the aforementioned plane and arranged at opposing positions so as to sandwich the electrode group (G) from the side of the shorter side. The secondary cell (101) further includes a holding unit (6) having a plane (6a) in contact with the third or the fourth insulating auxiliary sheet (5) sandwiched by the plane (6a) and the electrode group (G). The holding unit (6) is arranged in the vicinity of four end portions (1c) of the angular cell can (1) and is integrally formed with the angular cell can.

FIG. 1

**Description**

TECHNICAL FIELD

The present invention relates to a secondary battery in which a positive electrode and a negative electrode are stacked or laminated with a separator interposed therebetween, and a power feeding and storage system using the battery.

BACKGROUND ART

As is well known, among secondary batteries, which are rechargeable, in particular, lithium ion secondary batteries are used as power sources for home appliances because they have high energy density and high capacity. In addition, in recent times, the lithium ion secondary batteries are attracting attention as power sources for electric vehicles, power sources for houses, and storage batteries for storing residual power of power plants, and so on.
The lithium ion secondary batteries may be classified into a wound-type lithium ion secondary battery, which may be called as a cylindrical-type lithium ion secondary battery and in which a pair of sheet-shaped positive and negative electrodes having a strip shape are wound with a separator interposed therebetween in a spiral shape, and a stack-type lithium ion secondary battery in which a plurality of sheet-shaped positive electrodes and negative electrodes are stacked or laminated with a plurality of separators interposed therebetween.
In the stack-type lithium ion secondary battery, an electrode assembly, constituted by the plurality of sheet-shaped positive electrodes and negative electrodes, is generally housed in a square battery can, which may be called as a prismatic can, having a substantially rectangular cross-section. Meanwhile, in the wound-type lithium ion secondary battery, an electrode assembly, constituted by the pair of the sheet-shaped positive electrode and the sheet-shaped negative electrode, may be housed in a cylindrical battery can having a substantially cylindrical cross-section, or may be housed in the square battery can.

However, for the stack-type or wound-type lithium ion battery, when the square battery can is used, since the sheet-shaped positive electrode and negative electrode are stacked or laminated with the separator interposed therebetween, the positive electrode and the negative electrode may be dislocated in the square battery can, i.e., a misaligned stack may occur. When such a misaligned stack occurs, the positive electrode and the negative electrode contact each other, increasing the probability of failures such as a short circuit, and so on, occurring in the battery. In addition, since the square battery can is made of a conductive material, insulation from the positive electrode and the negative electrode is needed.
Accordingly, when the electrode assembly of the stack-type lithium ion secondary battery is housed in the square battery can, a technique of forming auxiliary insulating sheets on the surface of sheet-shaped electrodes (e.g., the sheet-shaped positive electrode or the sheet-shaped negative electrode), arranged at both ends of the electrode assembly, and fixing it with the electrode assembly by using tape, has been proposed (see Patent Document 1).

[Patent Document 1] Japanese Unexamined Patent Application Publication No. 2008-91099

DISCLOSURE OF INVENTION

Problems to be solved by the Invention

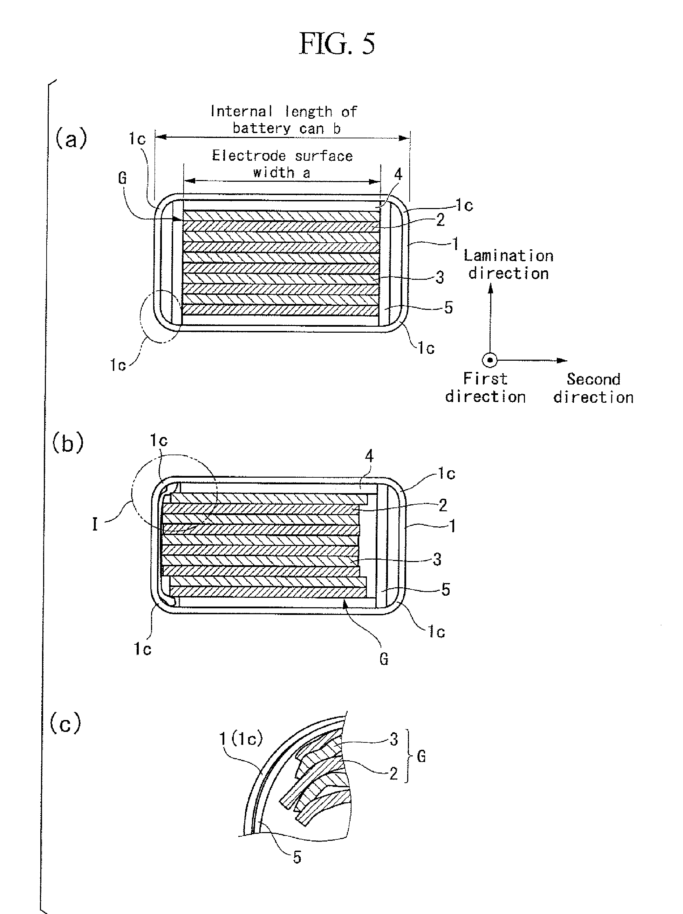

According to the proposal, it is said that it is possible to prevent occurrence of the misaligned stack by fixing the auxiliary sheets with the electrode assembly by using tape, in addition to insulate the electrode assembly against the square battery can to a direction of the stack of the electrodes, which is called as "Lamination direction". However, it is found that the misaligned stack cannot be sufficiently prevented according to the proposal, and that, it is difficult to sufficiently provide designed performance itself. This will be described below with reference to FIGS. 5(a), 5(b) and 5(c).

FIG. 5(a) shows a cross-section intersecting a direction perpendicular to a surface (a first direction), in which a positive electrode terminal (not shown) and a negative electrode terminal (not shown) are formed, among surfaces of a square battery can 1. An electrode assembly "G" in which sheet-shaped positive electrodes 2 and negative electrodes 3 are stacked or laminated with separators (not shown) interposed therebetween, is inserted into the square battery can 1. In order to insulate the electrode assembly G from the square battery can 1 made of a conductive material, as shown in the drawings, auxiliary insulating sheets 4 are arranged at the long sides among four sides of the electrode assembly, which is corresponding to the long sides of the surface in which the positive electrode terminal and the negative electrode terminal are formed, and auxiliary insulating sheets 5 are arranged at the short sides among four sides of the electrode assembly, which is corresponding to the short sides of the surface. In FIG.5(a),. when an electrode width "a" is equal to an internal length (an internal dimension) "b" of the battery can which is along the long sides, since corners 1c of the square battery can are rounded, the electrodes adjacent to the corners 1c are pressed and deformed to break the separators. Therefore, failures such as a short circuit might happen. In order to avoid deformation of the sheet-shaped electrodes, the electrode surface width "a" is designed to have a size slightly smaller than the internal length "b" and not affected by the rounding of the corners 1c of the battery can.
In addition, since an electrolyte should be stored in the square battery can 1, a predetermined space must be provided between the electrode assembly G and the square battery can 1. For this reason, the auxiliary insulating sheet 5 is made of an insulating material and as thin as possible ensuring insulating properties, meaning that an insulator with extremely thin thickness without elasticity is used.

However, in this configuration, for example, in the case that the battery is used as a power source for an electric vehicle, when continuous vibrations are applied to the square battery can 1, the tape may become loosened under an environment in which the electrode assembly G is immersed in the electrolyte, even though the electrode assembly G is fixed by the tape. As a result, the auxiliary insulating sheet 5 is deformed by the weight of the electrode assembly G along the shape of the square battery can 1, and a misaligned stack between the positive electrode 2 and the negative electrode 3 occurs in a surface direction as shown in FIG. 5(b). When the misaligned stack occurs, as shown in FIG. 5(c) in which the corner 1c of the square battery can 1 is enlarged, the positive electrode 2 and the negative electrode 3 corresponding to an end of the electrode assembly G are deformed along the square battery can 1. When vibrations are further applied in addition to the deformed state, it is fond that the separator might be broken to cause failures such as a short circuit, and so on. Meanwhile, since the electrode arranged at the center of the electrode assembly G is in simple contact with an inner wall of the square battery can 1 in a direction perpendicular to the inner wall even when the misaligned stack occurs, deformation of the electrode such as distortion cannot easily occur, and the probability of causing a failure is also very low.

In consideration of the above problems, it is an object of the present invention to provide a secondary battery, a power feeding, and storage system using the battery that are capable of preventing deformation of electrodes at corners of a square battery can, and maximally providing designed performance of the battery, even when continuous vibrations are applied to the battery.

Means for Solving the Problems

In order to solve the problems, a secondary battery of the present invention includes the following elements.
That is, the secondary battery includes,
a square battery can including a positive electrode terminal and a negative electrode terminal,
an electrode assembly arranged in the square battery can, in which a sheet-shaped positive electrode electrically connected to the positive electrode terminal and a sheet-shaped negative electrode electrically connected to the negative electrode terminal are stacked with a separator interposed therebetween,
first and second auxiliary insulating sheets arranged to sandwich the electrode assembly therebetween from sides of the electrode assembly corresponding to long sides of a surface of the square battery can on which the positive electrode terminal and the negative electrode terminal are formed,
third and fourth auxiliary insulating sheets having substantially the same size as an internal width of the square battery can corresponding to short sides of the surface, and arranged to sandwich the electrode assembly therebetween from sides of the electrode assembly corresponding to the short sides, and
retainers having surfaces to sandwich the third or fourth auxiliary insulating sheet with the electrode assembly, arranged adjacent to four corners of the square battery can, and formed as one body with the square battery can.

In addition, an electric vehicle as a power feeding system in accordance with the present invention includes:

a secondary battery including a square battery can including a positive electrode terminal and a negative electrode terminal, an electrode assembly arranged in the square battery can, in which a sheet-shaped positive electrode electrically connected to the positive electrode terminal, and a sheet-shaped negative electrode electrically connected to the negative electrode terminal are stacked with a separator interposed therebetween, first and second auxiliary insulating sheets arranged to sandwich the electrode assembly therebetween from sides of the electrode assembly corresponding to long sides of a surface of the square battery can on which the positive electrode terminal and the negative electrode terminal are formed, third and fourth auxiliary insulating sheets having substantially the same size as an internal width of the square battery can corresponding to short sides of the surface, and arranged to sandwich the electrode assembly therebetween from sides of the electrode assembly corresponding to the short sides, and retainers having surfaces to sandwich the third or fourth auxiliary insulating sheet with the electrode assembly, arranged adjacent to four corners of the square battery can, and formed as one body with the square battery can; and
a motor for driving wheels, wherein the motor is driven by receiving power from the secondary battery.
The electric vehicle may be a vehicle that can be driven by electricity.

Therefore, the electric vehicle includes a hybrid vehicle.
Further, a power storage system in accordance with the present invention includes:

a secondary battery including a square battery can including a positive electrode terminal and a negative electrode terminal, an electrode assembly arranged in the square battery can, and in which a sheet-shaped positive electrode electrically connected to the positive electrode terminal and a sheet-shaped negative electrode electrically connected to the negative electrode terminal are stacked with a separator interposed therebetween, first and second auxiliary insulating sheets arranged to sandwich the electrode assembly therebetween from sides of the electrode assembly corresponding to long sides of a surface of the square battery can on which the positive electrode terminal and the negative electrode terminal are formed, third and fourth auxiliary insulating sheets having substantially the same size as an internal width of the square battery can corresponding to short sides of the surface, and arranged to sandwich the electrode assembly therebetween from sides of the electrode assembly corresponding to the short sides, and retainers having surfaces to sandwich the third or fourth auxiliary insulating sheet with the electrode assembly, arranged adjacent to four corners of the square battery can, and formed as one body with the square battery can; and a power generation equipment, wherein the secondary battery receives electric power from the power generation equipment to store the electric power.

The power generation equipment may be any equipment for generating electric power such as a solar cell, a fuel cell, a windmill, thermal power generation equipment, hydroelectric power generation equipment, nuclear power generation equipment, and so on. Further, the power generation equipment may be a simple power generator installed at a vehicle, a bicycle, and so on. The power generation equipment is not limited to a power plant and it may be a power generator installed in a house.

It is most preferable that the retainers are simultaneously formed as one body with the square battery can through an impact press method (a cold forming process by impact) to improve manufacturing convenience and reduce manufacturing cost. However, the retainers may be formed separately from the square battery can to be fixed to the square battery can through welding, fusion, or the like, finally being integrally formed as one body therewith.

The auxiliary insulating sheet may be made of a material having elasticity and may have a thickness with elasticity to reduce deformation thereof. However, even when the auxiliary insulating sheet is made of a material having no elasticity substantially and may have a thickness with no elasticity substantially, it is possible to prevent the electrode assembly from being deformed along the corners of the battery can, because tension is generated in the auxiliary insulating sheet to be sandwiched and pressed between the electrode assembly and the retainers arranged at corners of the battery can, when vibration occurs.

In addition, in order to sufficiently infiltrate an electrolyte into the electrode assembly, the auxiliary insulating sheet may have a function of infiltrating the electrolyte into the sheet. The auxiliary insulating sheet may have through-holes to provide the infiltration function.

The auxiliary insulating sheet may be an auxiliary rigid insulating plate having a sufficient thickness to prevent deformation such as bending, or the like. The auxiliary rigid insulating plate may include a plate having elasticity, but excluding a plate having no elasticity substantially.

The auxiliary rigid insulating plate has substantially the same width as an internal length of the square battery can corresponding to short sides of a surface of the square battery can, on which the positive electrode terminal and the negative electrode terminal are formed. Therefore, the auxiliary rigid insulating plate is stopped by the rounded corners of the square battery can to make it difficult for the sheet-shaped electrodes corresponding to ends of the electrode assembly to enter the rounded corners, even when a pressure is applied to the auxiliary rigid insulating plate from the electrode assembly due to vibration. In this case, even when the auxiliary rigid insulating plate is slightly deformed, the deformed shape become gentle in comparison with the curve of the rounded corners of the square battery can. Therefore, the deformation of the electrodes corresponding to ends of the electrode assembly is able to be prevented.

The secondary batteries may be connected in series or in parallel to constitute a set of batteries.

Effects of the Invention

In accordance with the present invention, even when continuous vibrations are applied to a square battery can or even when charges/discharges are repeated to expand electrodes so that the tape for fixing the electrode assembly is loosened, it is possible to prevent deformation of electrodes corresponding to ends of the electrode assembly along rounded corners of the square battery can. As a result, it is possible to provide a secondary battery and a power feeding and storage system using the battery that are capable of reducing the probability of failures and providing designed performance. Therefore, the effect can be obtained by either of a stack-type or a wound-type secondary battery, for example, either of the stack-type lithium ion secondary battery or the wound-type lithium ion secondary battery.

BRIEF DESCRIPTION OF THE DRAWINGS

FIG. 1 shows a schematic structure of a stack-type secondary battery 101 in accordance with a first embodiment of the present invention. FIG. 1(a) shows a cross-sectional view and FIG. 1(b) shows a perspective view of an internal structure.
FIG. 2 shows a schematic structure of a stack-type secondary battery 102 in accordance with a second embodiment of the present invention. FIG. 2(a) shows a cross-sectional view and FIG. 2(b) shows a modified cross-sectional view different from FIG. 2(a).

FIG. 3 is a schematic cross-sectional view of a stack-type secondary battery 103 in accordance with a third embodiment of the present invention.

FIG. 4 is a schematic view of a power feeding and storage system using a secondary battery in accordance with a fourth embodiment of the present invention.

FIG. 5 is a schematic view of a conventional stack-type secondary battery. FIG. 5(a) shows a cross-sectional view in a normal state; FIG. 5(b) shows a cross-sectional view upon misaligned stack, and FIG. 5(c) shows an enlarged cross-sectional view of a major portion I of FIG. 5(b).

DESCRIPTION OF MAJOR REFERENCE NUMERALS

| 1: | Battery can |
|---|---|
| 1a: | Can wall |
| 1b: | Flat can wall |
| 1c: | Corner |
| 2: | Sheet-shaped positive electrode |
| 3: | Sheet-shaped negative electrode |
| 4: | First auxiliary insulating sheet (first auxiliary insulating member) |
| 5: | Second auxiliary insulating sheet (second auxiliary insulating member) |
| 6, 10, 11: | Retainer |
| 6a: | First retainer wall |
| 7: | Gap |
| 8: | Positive electrode terminal |
| 9: | Negative electrode terminal |
| 10a: | Third retainer wall |
| 11a: | Second retainer wall |
| 12: | House |
| 13: | Switchboard |
| 14: | Preliminary secondary battery |
| 15: | Control box |
| 16: | Power distribution system |
| 17: | Power generation equipment |
| 18: | Electric vehicle |
| 19: | Secondary battery |
| 23: | Edge of Electrode assembly |
| 101, 102, 103: | Stack-type secondary battery |
| G: | Electrode assembly |

BEST MODE FOR CARRYING OUT THE INVENTION

Hereinafter, a secondary battery in accordance with an embodiment of the present invention will be described with reference to the accompanying drawings. The present invention is not limited to the following embodiments, but may be variously modified without departing from the scope of the invention.

(First Embodiment)

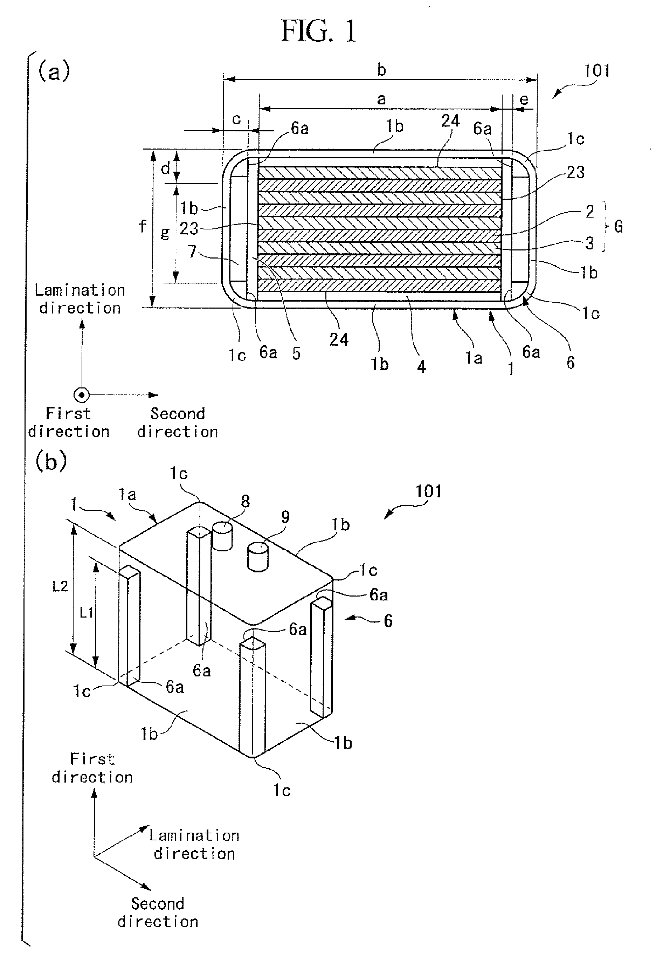

FIG. 1(a) is a cross-sectional view of a stack-type secondary battery 101, in accordance with a first embodiment of the present invention, in a direction of perpendicular to a surface of a square battery can 1, on which positive electrode terminals 8 and negative electrode terminals 9 are formed (hereinafter, the direction is referred to as a first direction), and FIG. 1(b) is a perspective view of an inner structure of the battery can. In addition, FIG. 1(b) also shows positions of the positive electrode terminals 8 and the negative electrode terminals 9.

As shown in FIG. 1(a), the stack-type secondary battery 101 includes a square battery can 1, an electrode assembly "G", first auxiliary insulating sheets 4 and second auxiliary insulating sheets 5, which are arranged between the battery can 1 and the electrode assembly "G", and an electrolyte (not shown).

As shown in FIG. 1(b), the battery can 1 is the prismatic can and has a can wall 1a formed in a square shape like a box-shaped body, and the electrode terminals 8 and 9 are formed at the can wall 1a formed in the first direction. As shown in FIG. 1(a), the battery can 1 has four flat can walls 1b extended to the first direction from a surface of the battery can 1, which is a can wall the electrode terminals 8 and 9 are formed, and two of each flat can walls 1b adjacent to each other are connected through corners 1c having a radius of curvature.

The square battery can 1, made of aluminum or the like, includes an electrode assembly "G" in which rectangular sheet-shaped positive electrodes 2 electrically connected to the positive electrode terminal 8 and rectangular sheet-shaped negative electrodes 3 electrically connected to the negative electrode terminal 9 are stacked or laminated with separators (not shown) interposed therebetween.

Therefore, the two auxiliary insulating sheets 4 arranged to sandwich the electrode assembly "G" from sides of the electrode assembly "G" corresponding to long sides of the surface of the square battery can 1 (hereinafter, a direction of the long side in FIG (a) is referred to as a second direction), and the two auxiliary insulating sheets 5 arranged to sandwich the electrode assembly "G" from sides of the electrode assembly "G" corresponding to short sides of the surface (hereinafter, a direction of the short side in FIG (a) is referred to as a lamination direction), are inserted.

Retainers 6 are integrally formed as one body with the square battery can 1 at four corners 1c of the square battery can 1. In the case of a cold forming process as, an impact press, the retainers 6 and the square battery can 1 are made of the same material. The retainers 6 may be formed separately from the square battery can 1 to be fixed thereto through welding, or the like. In this case, the retainers 6 and the square battery can 1 may be made of different materials.

The retainers 6 are configured, such that the rounded shapes of the corners of the square battery can 1 are removed to prevent distortion of the electrodes at edges of the electrode assembly. Therefore, the auxiliary insulating sheets 5 can be securely arranged between the electrode assembly and the retainers 6, to add tension to the auxiliary insulating sheets when a pressure is applied to the auxiliary insulating sheet from the electrode assembly due to vibration. The surfaces (a first retainer wall 6a) of the retainers 6 in contact with the auxiliary insulating sheets 5 are substantially parallel to the direction of the short side of the square battery can 1, i.e., the lamination direction. Since the first retainer wall 6a can prevent the sheet-shaped electrode at the edge of the electrode assembly from entering the rounded corners of the square battery can 1, it is possible to prevent an occurrence of the failure of the battery. Further, it is also possible to prevent a misaligned stack of another sheet-shaped electrode using the tension.

Furthermore, as shown in FIG. 1(b), a length L1 of the retainer 6 in a direction perpendicular to the surface of the square battery can 1 on which the electrode terminals 8 and 9 are formed, i.e., the first direction, may be smaller than an internal length L2 of the square battery can 1 in the first direction in a case that, the tension can be sufficiently obtained.

Provided that the electrode surface width in the second direction is "a", the internal length of the square battery can 1 in the second direction is "b", and a thickness of the auxiliary insulating sheet 5 in the second direction is "e", a length "c" of the retainer 6 in the second direction is designed as follows.

$$c \doteqdot (b - 2e - a) \div 2$$

In order to maximally increase an electric capacity, the electrode surface width "a" is designed to have substantially the same width as a width of subtracting a width "c" of the rounded corners 1c from the internal length "b" of the square battery can 1.

In addition, since a gap 7, defined by the auxiliary insulating sheet 5 and the square battery can 1 with the retainer 6 interposed therebetween, has a space sufficient to store an electrolyte, provided that an internal length of the square battery can 1 in the lamination direction is "f", and a width of a width of a flat surface of the flat can wall 1b in the lamination direction is "g", a length "d" of the retainer 6 in the lamination direction of the square battery can 1 is preferable to be designed as follows.

$$(f - g) \div 2 \leq d \leq f / 4$$

The width of the auxiliary insulating sheet 5 may be designed to have substantially the same value as "f".

According to the configuration, even though the auxiliary insulating sheets 4 and 5 are made of a material with no elasticity and to a thickness with no elasticity, when vibration occurs, tension is generated from the auxiliary insulating sheets due to the auxiliary insulating sheets being interposed between the retainers 6 arranged at the corners 1c and the electrode assembly "G" to prevent deformation of the sheet-shaped electrodes at the edges of the electrode assembly G.

When the auxiliary insulating sheets 4 and 5 are made of a material with elasticity and to a thickness with elasticity, it is possible to more effectively prevent deformation of the electrodes at the ends of the electrode assembly. Accordingly, the auxiliary insulating sheet 5 may be formed to have a shape that cannot be easily bent or curved, for example, a plate shape having a substantially larger thickness if possible.

In addition, when the auxiliary insulating sheet 4 and the auxiliary insulating sheet 5 are connected to each other by being fused and fixed using an insulating tape, it is possible to reduce clearance between the electrode assembly and the auxiliary insulating sheets when the electrodes are dislocated. Therefore, it is possible to prevent a misaligned stack in the square battery can more effectively.

While in the first embodiment, the case of the electrode assembly of the stack-type secondary battery was described, it will be appreciated that, even when a wound-type electrode assembly is housed in the square battery can, the same effect can be obtained. The secondary battery may be, for example, a lithium ion secondary battery.

(Second Embodiment)

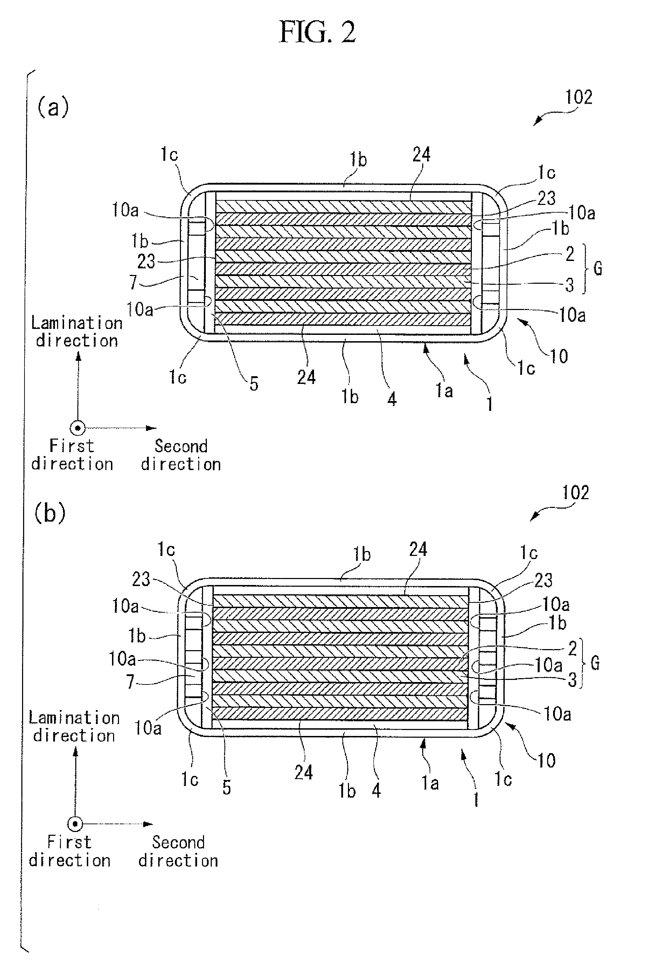

A stack-type secondary battery in accordance with a second embodiment of the present invention will be described with reference to FIGS. 2(a) and 2(b). The present invention is not limited to the following embodiment, but may be variously modified without departing from the scope of the invention. In addition, the same elements in FIG. 2 as in FIG. 1 are designated by the same reference numerals in FIG. 1, and detailed descriptions thereof will not be repeated.

FIG. 2(a) shows retainers 10 different from the retainers 6 of FIGS. 1(a) and (1b). The retainers 10 are arranged along the short sides of a surface of the square battery can 1 on which a positive electrode terminal and a negative electrode terminal are formed, except for the rounded corners 1c of the square battery can 1. Except for this, the second embodiment is the same as the first embodiment.

The retainers 10 have a plate shape so that one auxiliary insulating sheet 5 is supported by third retainer walls 10a of two retainers 10 in a two-point support manner. The retainers 10 are formed as one body with the square battery can 1. In the case of cold forming process like, an impact press, the retainers 10 and the square battery can 1 are made of the same material. The square battery can 1 and the retainers 10 may be separately formed and then fixed to each other through welding, fusion, or the like. In this case, the square battery can and the retainers may be made of different materials.

In the configuration, since the retainers 10 are not present at the end of the electrode assembly positioned via the auxiliary insulating sheet 5, in particular, in a position opposite to the position of the electrode around the farthest end of the electrode assembly, when the sheet is made of a material with no elasticity or to a thickness with no elasticity, the same problem as FIG. 5 (c) may occur. However, when the auxiliary insulating sheet 5 is made of a material with elasticity and to a thickness with elasticity, it is possible to prevent the electrode corresponding to the end of the electrode assembly from entering the rounded corner of the square battery can 1. Therefore, the embodiment is advantageous to the case that the auxiliary insulating sheet 5 is made of a material with elasticity and to a thickness with elasticity.

Of course, it is more advantageous if the auxiliary insulating sheet 5 has a shape that cannot be easily deformed, for example, bent, curved, or the like.

When the elasticity of the auxiliary insulating sheet 5 are insufficient, a larger number of retainers 10 are arranged to support the auxiliary insulating sheet 5 using larger numbers of support points, for preventing dislocation and curve of the electrodes at the corners of the square battery can, similar to the above embodiment. In FIG. 2(b), one of the retainers 10 is further arranged at center part, in addition to the other retainers 10, to support the auxiliary insulating sheets 5 in three points. If an electrolyte can be sufficiently stored, three or more retainers 10 may be formed to support the auxiliary insulating sheet 5 in three or more points.

In addition, in order to securely prevent the end electrode of the electrode assembly from entering the rounded corners of the square battery can, the retainers 6 described in the first embodiment may be used together with the retainers 10.

(Third Embodiment)

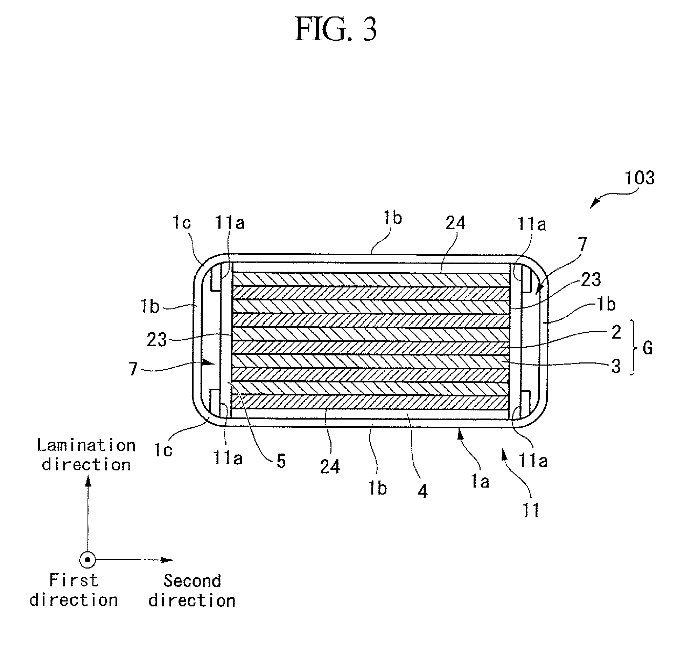

A stack-type secondary battery 103 in accordance with a third embodiment of the present invention will be described with reference to FIG. 3. The present invention is not limited to the following embodiment, but may be variously modified without departing from the scope of the invention. In addition, the same elements in FIG. 3 as in FIGS. 1 and 2 are designated by the same reference numerals in FIGS. 1 and 2, and detailed descriptions thereof will not be repeated.

In FIG. 3, retainers 11 are arranged apart from the short sides of the surface of the square battery can 1 in the second direction, which are similar shape to make the length "c" of the retainer 6 of FIG (a) in the second direction further reduced. Except for this, the third embodiment is substantially the same as the first embodiment. The retainers 11 are configured to support the auxiliary insulating sheets 5 using second retainer walls 11a. In this configuration, it is possible to store a larger amount of electrolyte than in the first embodiment.

In addition, in order to securely prevent occurrence of a misaligned stack of the sheet-shaped electrode in a center part of the electrode assembly, the retainers 10 described in the second embodiment may be used together with the retainers 11.

(Fourth Embodiment)

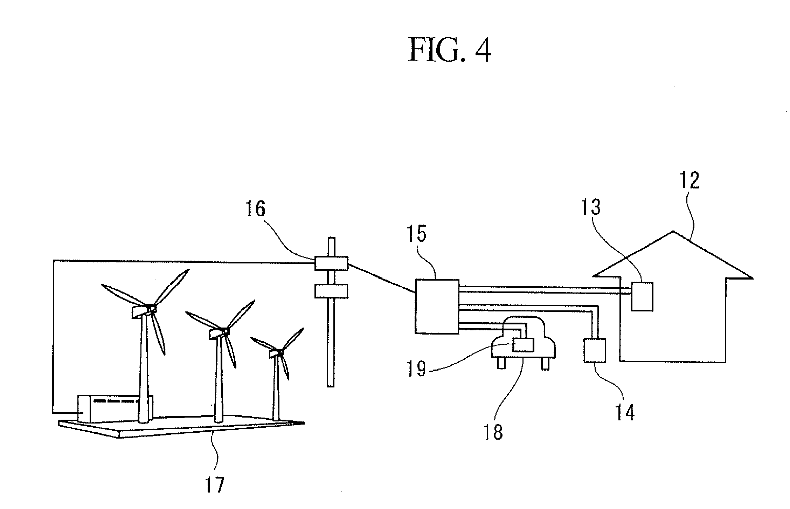

A power storage and feeding system using a secondary battery in accordance with a fourth embodiment of the present invention will be described with reference to FIG. 4. The present invention is not limited to the following embodiment, but may be variously modified without departing from the scope of the invention.

A secondary battery 19 installed in an electric vehicle 18 and a preliminary secondary battery 14 arranged outside a house 12 are the secondary batteries in accordance with the present invention described in the first, the second or the third embodiments.

First, a power storage system will be described. Electric power generated from power generation equipment 17, such as wind power generation, thermal power generation, hydroelectric power generation, nuclear power generation, solar cell, fuel cell, or the like, is supplied to a control box 15, used by a user via a power distribution system 16. When the user operates the control box 15, the electric power transmitted from the power generation equipment 17 is supplied to any one of the secondary battery 19 as a drive power source of the electric vehicle 18, the preliminary secondary battery 14, and a switchboard 13. The preliminary secondary batter 14 or the secondary battery 19 of the electric vehicle 18 performs power charge/storage when the electric power is supplied.

In order to use the preliminary secondary battery 14 as a preliminary power source when a power feeding from the power generation equipment 17 is stopped due to a disaster, or the like, it is preferable to sufficiently store electric power in the preliminary secondary battery 14. The control box may be program-controlled such that the electric power is supplied to the switchboard 13 by day and to the preliminary secondary battery 14 or the secondary battery 19 of the electric vehicle 18 by night.

Hereinafter, a power feeding system will be described. The preliminary secondary battery 14 charged by the power storage system is electrically connected to the switchboard 13 in the house 12 via the control box 15. The switchboard 13 is electrically connected to home appliances, such as an air conditioner, a television, or the like, which are connected to plugs in the house 12. The user can operate the control box 15 to select to drive the home appliances in the house 12 using electric power received from the power distribution system 16 or electric power from the preliminary secondary battery 14 stored by the power storage system.

By operation of the control box, when the preliminary secondary battery 14 is electrically connected to the switchboard 13, the power can be supplied from the preliminary secondary battery 14 to the switchboard 13 to drive the home appliances.

The electric vehicle 18 can run by supplying electric power to a wheel driving motor from the secondary battery 19 charged by the power storage system. The electric vehicle 18 may be a vehicle having wheels that can be driven by the motor. Therefore, the electric vehicle 18 may be a hybrid vehicle.

Since the power storage and feeding system using the secondary battery in accordance with the present invention can securely prevent the misaligned stack and the electrode twisting in the corners of the square battery can due to vibration, that are causes of failures of the secondary battery, even when the system is used for a vehicle as the power feeding system to which a large amount of vibrations are applied or for the power feeding and storage system in a country in which earthquakes frequently occur, it is possible to stably operate without trouble.

## Claims

1. A secondary battery comprising:

   a square battery can including a positive electrode terminal and a negative electrode terminal;
   an electrode assembly arranged in the square battery can, in which a sheet-shaped positive electrode electrically connected to the positive electrode terminal, and a sheet-shaped negative electrode electrically connected to the negative electrode terminal are stacked or laminated with a separator interposed between them,
   first and second auxiliary insulating sheets arranged to sandwich the electrode assembly between them from sides of the electrode assembly corresponding to long sides of a surface of the square battery can on which the positive electrode terminal and the negative electrode terminal are formed,
   third and fourth auxiliary insulating sheets having substantially the same size as an internal width of the square battery can corresponding to short sides of the surface, and arranged to sandwich the electrode assembly between them from sides of the electrode assembly corresponding to the short sides, and
   retainers having surfaces to sandwich the third or fourth auxiliary insulating sheet with the electrode assembly, arranged adjacent to four corners of the square battery can, and formed as one body with the square battery can.

2. The secondary battery according to claim 1, wherein the retainers are simultaneously formed with the square battery can by a cold forming process.

3. The secondary battery according to claim 1, wherein the sheet-shaped positive electrode and the sheet-shaped negative electrode are provided in plural, and the sheet-shaped positive electrodes and the sheet-shaped negative electrodes are stacked or laminated with separators interposed therebetween, respectively.

4. A secondary battery comprising:

   a square battery can including a positive electrode terminal and a negative electrode terminal;
   an electrode assembly arranged in the square battery can, in which a sheet-shaped positive electrode electrically connected to the positive electrode terminal, and a sheet-shaped negative electrode electrically connected to the negative electrode terminal are stacked or laminated with a separator interposed between them;
   first and second auxiliary insulating sheets arranged at opposite to sandwich the electrode assembly between them from sides of the electrode assembly corresponding to long sides of a surface of the square battery can on which the positive electrode terminal and the negative electrode terminal are formed; and
   first and second auxiliary rigid insulating plates having substantially the same size as an internal width of the square battery can corresponding to short sides of the surface, and arranged to sandwich the electrode assembly from sides of the electrode assembly corresponding to the short sides.

5. The secondary battery further comprising, retainers having surfaces to sandwich the first or second auxiliary rigid insulating plate with the electrode assembly, wherein the retainers are arranged adjacent to four corners of the square battery can, and formed as one body with the square battery can.

6. An electric vehicle comprising:

   a secondary battery including:
   a square battery can including a positive electrode terminal and a negative electrode terminal;
   an electrode assembly arranged in the square battery can, in which a sheet-shaped positive electrode electrically connected to the positive electrode terminal, and a sheet-shaped negative electrode electrically connected to the negative electrode terminal are stacked or laminated with a separator interposed between them;
   first and second auxiliary insulating sheets arranged at opposite to sandwich the electrode assembly between them from sides of the electrode assembly corresponding to long sides of a surface of the square battery can on which the positive electrode terminal and the negative electrode terminal are formed;

third and fourth auxiliary insulating sheets having substantially the same size as an internal width of the square battery can corresponding to short sides of the surface, and arranged to sandwich the electrode assembly between them from sides of the electrode assembly corresponding to the short sides; and

retainers having surfaces to sandwich the third or fourth auxiliary insulating sheet with the electrode assembly, arranged adjacent to four corners of the square battery can, and formed as one body with the square battery can; and a motor for driving wheels,

wherein the motor is driven by receiving power from the secondary battery.

7.  A power storage system comprising:

a secondary battery including:
a square battery can including a positive electrode terminal and a negative electrode terminal;
an electrode assembly arranged in the square battery can, in which a sheet-shaped positive electrode electrically connected to the positive electrode terminal, and a sheet-shaped negative electrode electrically connected to the negative electrode terminal are stacked or laminated with a separator interposed between them;

first and second auxiliary insulating sheets arranged at opposite to sandwich the electrode assembly between them from sides of the electrode assembly corresponding to long sides of a surface of the square battery can on which the positive electrode terminal and the negative electrode terminal are formed;

third and fourth auxiliary insulating sheets having substantially the same size as an internal width of the square battery can corresponding to short sides of the surface, and arranged to sandwich the electrode assembly from sides of the electrode assembly corresponding to the short sides; and

retainers having surfaces to sandwich the third or fourth auxiliary insulating sheet with the electrode assembly, arranged adjacent to four corners of the square battery can, and formed as one body with the square battery can; and power generation equipment,

wherein the secondary battery receives power from the power generation equipment to store the power.

# FIG. 1

(a)

Lamination direction

First direction

Second direction

(b)

First direction

Lamination direction

Second direction

# FIG. 2

(a)

Lamination direction

First direction    Second direction

(b)

Lamination direction

First direction    Second direction

# FIG. 3

Lamination direction

First direction

Second direction

# FIG. 4

# FIG. 5

(a)

Internal length of
battery can b

Electrode surface
width a

Lamination
direction

First          Second
direction    direction

(b)

(c)

**INTERNATIONAL SEARCH REPORT**

| International application No. |
|---|
| PCT/JP2009/056680 |

A.  CLASSIFICATION OF SUBJECT MATTER
*H01M10/04(2006.01)i, H01M10/40(2006.01)i*

According to International Patent Classification (IPC) or to both national classification and IPC

B.  FIELDS SEARCHED

Minimum documentation searched (classification system followed by classification symbols)
H01M10/04, H01M10/40

Documentation searched other than minimum documentation to the extent that such documents are included in the fields searched
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 2008-91079 A  (Toshiba Corp.), 17 April, 2008 (17.04.08), Claims; Par. Nos. [0079] to [0092]; Fig. 8 & US 2008/0078594 A1 | 1-7 |
| Y | JP 2003-109667 A  (Mitsubishi Electric Corp.), 11 April, 2003 (11.04.03), Claims; Par. Nos. [0005], [0062] to [0064]; Figs. 6, 7 & US 2003/0064284 A1 | 1-7 |
| A | JP 2000-182579 A  (Toshiba Battery Co., Ltd.), 30 June, 2000 (30.06.00), Claims; Par. Nos. [0014], [0015]; drawings (Family: none) | 1-7 |

| ☒  Further documents are listed in the continuation of Box C. | ☐  See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 April, 2009 (27.04.09) | 19 May, 2009 (19.05.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2009/056680 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 00/59063 A1  (Matsushita Electric Industrial Co., Ltd.), 05 October, 2000 (05.10.00), Claims; drawings & US 006743546 B1      & EP 001202371 A1 | 1-7 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008091099 A